# FASCICULE DE BREVET EUROPEEN

(11) **EP 0 452 216 B1**
(45) Date de publication et mention de la délivrance du brevet: **15.12.1993**
(21) Numéro de dépôt: 91400961.8
(22) Date de dépôt: 10.04.1991
(51) Int. Cl.: G01N 3/24, G01N 3/04

(54) **Machine d'essais d'éprouvettes en cisaillement**
Gerät zum Scherprüfung von Prüflingen
Machine for shear testing of specimens

(30) Priorité: 12.04.1990 FR 9004727
(43) Date de publication de la demande: 16.10.1991
(73) Titulaire: AEROSPATIALE Société Nationale Industrielle, 75781 Paris Cédex 16 (FR)
(72) Inventeur: Cussac, Michel, F-33260 La Teste (FR); Lequertier, Jean-Michel, F-33160 Saint Aubin du Médoc (FR)
(74) Mandataire: Mongrédien, André

(56) Documents cités:
- FR-A- 1 579 091
- COMPTES RENDUS DE L'ACADEMIE DES SCIENCES, SERIE II: MECANIQUE, PHYSIQUE, CHIMIE vol. 303, no. 20, 21 décembre 1986, PARIS FR pages 1787 - 1790; G. NEMOZ ET AL: "Chimie de l'état solide: Mise au point d'un test en cisaillement dynamique pour caractériser la zone interfaciale dans un composite unidirect ionnel"
- SOVIET INVENTIONS ILLUSTRATED Derwent Publications Ltd., LONDON GB Section Electrical, Week B25, August 1, 1979 Abstract no. F4594B/25, Class R16 & SU-A-620869

## Description

L'invention se rapporte à une machine d'essais d'éprouvettes en cisaillement.

Les spécialistes savent qu'il est fort difficile de soumettre des éprouvettes à des contraintes de cisaillement pur. Des machines intéressantes sont celles qui permettent de travailler suivant la méthode proposée par Iosipescu, en particulier dans le brevet français 1 579 091.

Les machines de ce type comprennent essentiellement deux mors reliés entre eux, éventuellement par l'intermédiaire d'un bâti, et qui sont constitués de manière à saisir chacun une extrémité longitudinale de l'éprouvette soumise au cisaillement à l'emplacement de deux surfaces opposées suivant le sens de la largeur des éprouvettes. L'essai consiste à déplacer mutuellement les mors dans le sens de la largeur des éprouvettes. Les conditions géométriques sont telles que le moment fléchissant est nul entre les mors, et il ne subsiste donc plus qu'un effort tranchant qui peut être aisément calculé. La partie centrale de l'éprouvette est avantageusement affaiblie au moyen de deux entailles situées l'une en face de l'autre, ce qui permet d'obtenir une section minimale où l'accroissement des contraintes doit produire la rupture.

Dans la machine conçue par Iosipescu, les mors comprenaient chacun une pièce en forme de fer à cheval dont une branche portait un doigt de pressage fixe et dont l'autre branche portait un doigt de pressage mobile dans le sens de la largeur des éprouvettes sous l'action d'une molette afin de réaliser le bridage. Les doigts pressaient des parties décalées longitudinalement de l'extrémité des éprouvettes. Les mors étaient disposés anti-symétriquement par rapport au centre des éprouvettes. On a ensuite imaginé de remplacer les doigts de pressage par un coin glissant sur la face interne inclinée d'une des branches du fer à cheval de manière que sa face dirigée vers la face interne de l'autre branche restait parallèle à cette face interne avec un écartement variable. Cette disposition permet de brider dans de meilleures conditions les extrémités des éprouvettes dans les mors.

Des sollicitations parasites qui compromettent la pureté du cisaillement peuvent cependant être provoquées par le bridage dans certains cas. Si en particulier les éprouvettes sont de très faible épaisseur, un rapprochement légèrement trop important des doigts ou des coins peut faire apparaître une amorce de flambement qui sera ensuite aggravée quand les mors seront mis en mouvement pour exécuter l'essai.

L'article des Comptes rendus de l'Académie des Sciences, Série II (Mécanique, Physique, Chimie), volume 303, n°201 et 21, décembre 1986, pages 1787 à 1790, décrit une éprouvette soumise à du cisaillement sur une section longitudinale et dont les faces latérales sont serrées de part et d'autre de cette section entre les mâchoires de deux mors. Le cisaillement est dynamique et à une fréquence qui impose de petits déplacements incapables de provoquer du flambement. Il ne semble pas y avoir de mise en butée des extrémités de l'éprouvette dans la direction du mouvement, comme dans l'invention.

L'abrégé F4594B/25 paru dans "Soviet Inventions Illustrated", section "Electrical" le 1er août 1979 est relatif au document SU-A-620 869, où des vis retiennent en direction longitudinale une éprouvette à cisailler.

Une machine perfectionnée est proposée en tant qu'invention. Elle comprend deux mors reliés entre eux, dans lesquels les extrémités longitudinales des éprouvettes sont saisies et qui se déplacent mutuellement dans le sens de la largeur des éprouvettes, chacun des mors étant constitué de deux pièces mobiles mutuellement dans le sens de la largeur des éprouvette s et s'appuyant sur deux surfaces opposées des extrémités longitudinales des éprouvettes pour réaliser la saisie, caractérisée par une paire de mâchoires de pincement associée à chaque mors, les paires de mâchoires étant reliées au mors associé par un mécanisme de commande permettant aux mâchoires de chaque paire d'être mobiles mutuellement dans le sens de l'épaisseur des éprouvettes et de s'appuyer sur deux autres surfaces opposées des extrémités longitudinales des éprouvettes.

Les mécanismes de commande peuvent consister en un arbre tournant dans un des mors correspondant et muni de parties filetées en sens opposés sur chacune desquelles une des mâchoires d'une paire respective est vissée.

Si les mors sont constitués d'une pièce en forme de fer à cheval et d'un coin, comme dans la réalisation antérieure décrite plus haut, on peut avantageusement prévoir que la branche des pièces en fer à cheval sur laquelle glissent les coins est munie d'une fente qui s'étend dans le sens longitudinal des éprouvettes. Le montage des éprouvettes entre les branches des mors reste en effet très facile malgré l'obstacle constitué par les mâchoires de pincement, qui s'oppose à l'introduction des éprouvettes en les introduisant par des translations suivant leur épaisseur entre les branches des mors situés face à face. On adopte un mode de montage différent qui consiste à reculer les coins pour en dégager les fentes et à décaler mutuellement les mors dans le sens de la largeur des éprouvettes. L'éprouvette à vérifier est alors introduite entre les mors, qui sont alors rapprochés et mis face à face en faisant pénétrer les extrémités de l'éprouvette à travers les fentes. Quand les mors sont remis, face à face, les coins sont avancés de manière à maintenir l'éprouvette.

On peut encore prévoir une butée de positionnement longitudinal des éprouvettes sur un des mors.

L'invention va maintenant être décrite plus en détail à l'aide des figures suivantes annexées à titre illustratif et non limitatif qui représentent une réalisation concrète de l'invention :
- la figure 1 représente une vue en perspective de la réalisation ;
- la figure 2 représente une vue des mors et d'une éprouvette mise en place, en direction de l'épaisseur de l'éprouvette ;
- la figure 3 représente une vue analogue de l'ensemble de la machine, exposant des parties cachées sur la figure 2 ;
- la figure 4 représente les mors et l'éprouvette en coupe dans le sens de la largeur de l'éprouvette ; et
- la figure 5 est une vue explicitant le montage de l'éprouvette.

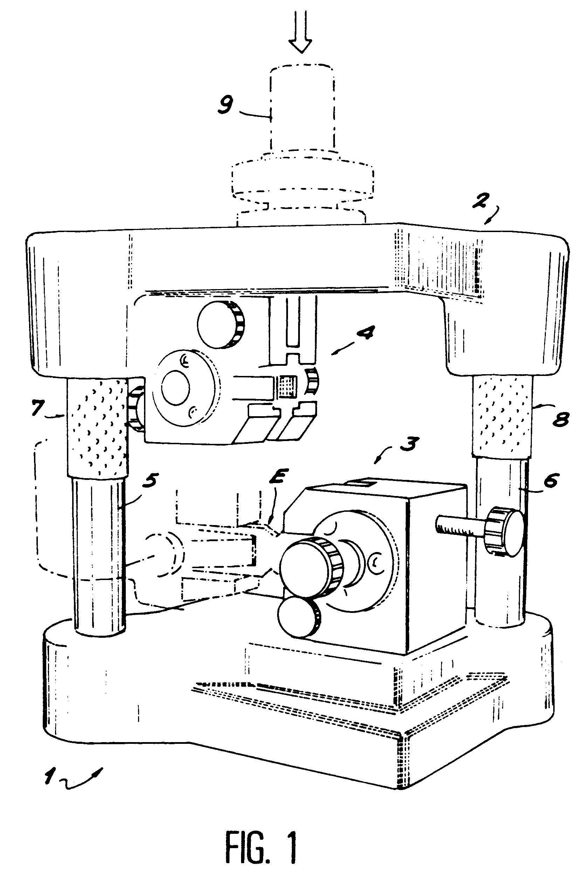

On voit sur la figure 1 que la machine d'essais en cisaillement comprend une plaque fixe 1, une plaque mobile 2, un mors fixe 3 fixé à la plaque fixe 1 et un mors mobile 4 fixé à la plaque mobile 2. En outre, deux colonnes 5 et 6 sont fixées à la plaque fixe 1 et s'étendent dans le sens de la largeur d'une éprouvette E maintenue entre les mors 3 et 4. La plaque mobile 2 est munie d'alésages qui lui permettent de coulisser sur les colonnes 5 et 6 à l'aide de douilles intermédiaires à billes 7 et 8, et elle porte un embout supérieur 9 destiné à l'accrochage de poids ou à l'introduction d'efforts permettant de régler la valeur de l'effort de cisaillement introduit. L'embout supérieur 9 est juste au-dessus de l'intervalle entre les deux mors 3 et 4, et par ailleurs les colonnes 5 et 6 entourent les deux mors 3 et 4 de manière symétrique. La réalisation représentée comporte des colonnes 5 et 6 verticales et la plaque mobile 2 au-dessus de la plaque fixe 1, mais d'autres dispositions peuvent être retenues.

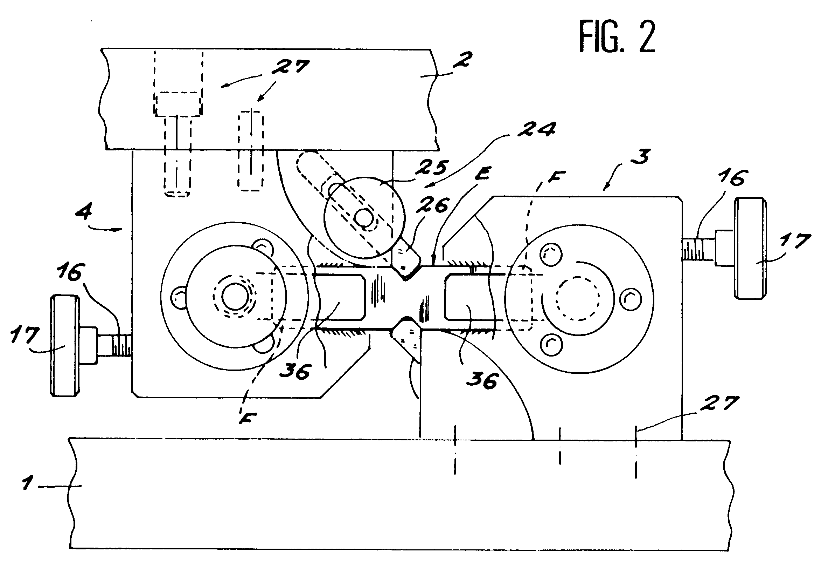

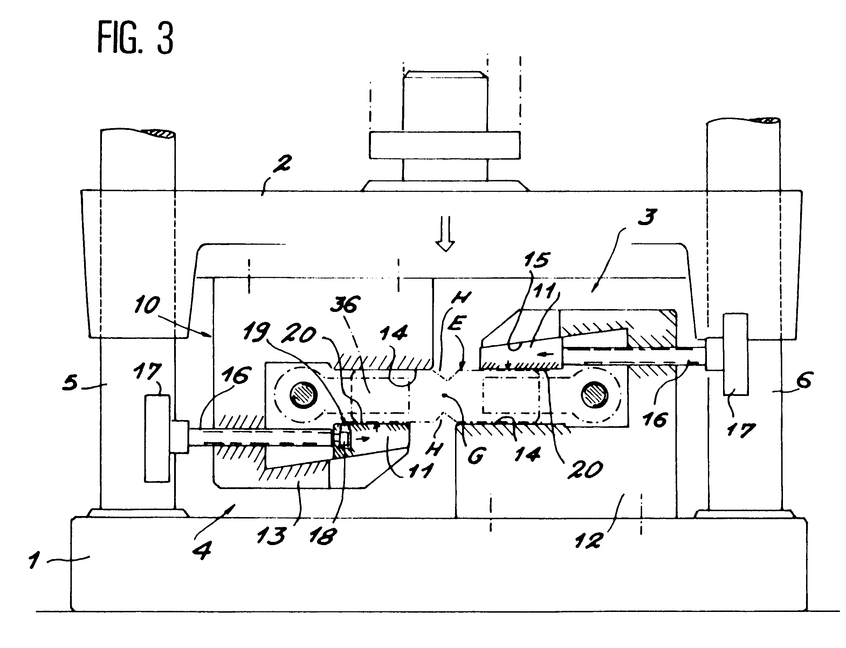

On va maintenant passer à la description des mors 3 et 4 à l'aide des figures 2 et 3. Comme ils sont semblables et disposés symétriquement par rapport au point central de la machine, on n'en décrira qu'un seul.

Chacun des mors 3 ou 4 comprend essentiellement une pièce en fer à cheval 10 et un coin 11. La pièce en fer à cheval 10 comprend une première branche 12 fixée à une plaque 1 ou 2 respective et une seconde branche 13 dirigée vers l'autre plaque. La face interne 14 de la première branche 12 est horizontale, mais la face interne 15 de la seconde branche 13 est inclinée et le coin 11 glisse sur elle dans le sens de l'inclinaison correspondant au sens longitudinal de l'éprouvette E.

Une tige filetée 16 est pour cela vissée dans un taraudage de la pièce en fer à cheval 10. La tige filetée 16 est terminée par une molette 17 à une extrémité et comporte à l'autre extrémité une rondelle 18 prisonnière dans une rainure à section en T 19 verticale du coin 11.

L'angle du coin 11 et l'inclinaison de la face interne 15 inclinée sont tels que la face interne 20 du coin 11, dirigée vers la face interne 14 horizontale, est également horizontale. Quand la molette 17 est tournée, la tige filetée 16 est donc avancée, ce qui déplace le coin 11 dans le sens longitudinal de l'éprouvette E sur la face interne 15 inclinée et fait varier la distance entre les faces internes horizontales 14 et 20 du coin 11 et de la première branche 12.

L'éprouvette E est de forme sensiblement rectangulaire et présente une faible épaisseur. Ses extrémités longitudinales F sont saisies chacune par un des mors 3 ou 4 et sa partie centrale G qui s'étend entre les mors 3 et 4 est affaiblie par deux rainures H en face l'une de l'autre, à sections à angle droit et qui s'étendent à partir des surfaces inférieure et supérieure de l'éprouvette E.

La première branche 12 des pièces en fer à cheval 10 comporte un dispositif de centrage 24 constitué par une molette 25 dont la rotation permet de régler l'avance d'un pion 26 incliné à 45° sur l'horizontale. Chacun des pions 26 se loge dans une des entailles H, s'appuie sur une de ses faces à angle droit par son extrémité et sur l'autre de ses faces par sa face circonférentielle. L'avance des pions 26 permet donc de réaliser le centrage longitudinal parfait de l'éprouvette E.

La référence 27 désigne globalement des pions de positionnement et des vis de fixation des mors 3 et 4 sur les plaques 1 et 2.

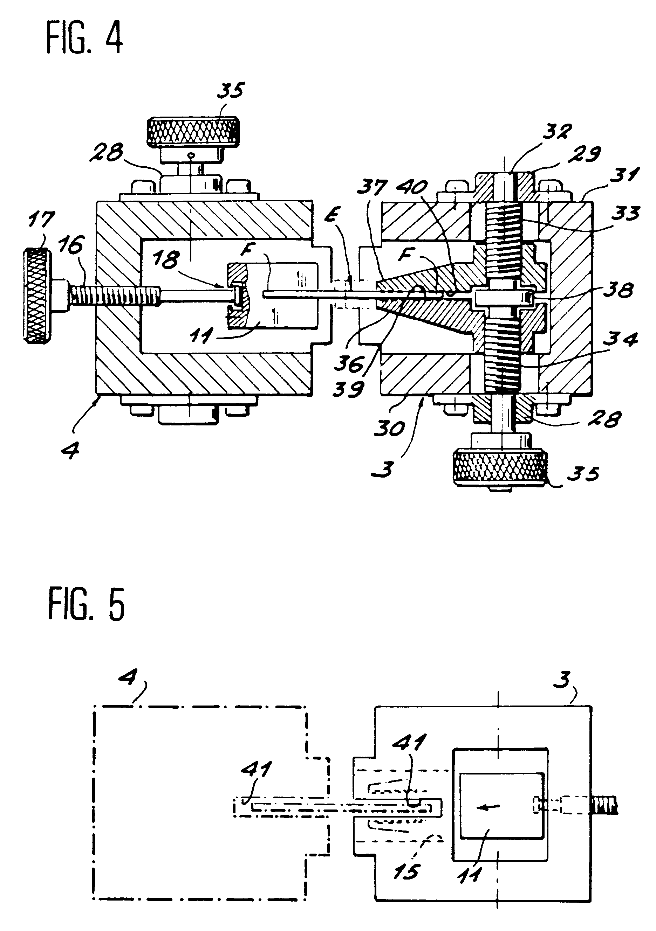

On voit sur la figure 4 que les pièces en fer à cheval 10 sont pourvues de deux paliers opposés 28 et 29 sur leurs faces latérales externes 30 et 31, entre les branches 12 et 13. Les paliers 28 et 29 reçoivent un arbre 32 qui s'étend entre eux et comprend deux parties filetées en sens opposés 33 et 34 ainsi qu'une molette 35 permettant de le tourner. Une mâchoire de pincement 36 ou 37 est engagée par vissage sur une des parties filetées respectives 33 et 34. La rotation de la molette 35 provoque donc l'écartement ou au contraire le rapprochement des mâchoires de pincement 36 et 37 suivant un mouvement mutuel axial à l'arbre 32, dans le sens de l'épaisseur de l'éprouvette E qu'il est donc possible de saisir à ses extrémités longitudinales entre le coin 11 et la première branche 12, sur des surfaces opposées perpendiculaires à l'épaisseur de l'éprouvette E.

Un épaulement 38 est ménagé au centre de l'arbre 32 pour éviter de détériorer les surfaces de préhension 39 et 40 des mâchoires de pincement 36 et 37 en les mettant en contact.

Les figures 3 et 5 montrent que les secondes branches 13 des pièces en fer à cheval 10 sont munies d'une fente longitudinale 41 pour permettre le passage de l'éprouvette E et sa mise en place dans les mors 3 et 4 suivant la méthode qui va maintenant être décrite.

Avant d'effectuer un essai, on soulève la plaque supérieure 2 de manière à écarter les mors 3 et 4. On écarte de même les mâchoires de pincement 36 et 37 de chacun des mors 3 et 4 et on recule les coins 11 de manière à dégager les fentes 41, de même que les pions de centrage 26. L'état obtenu est représenté en traits pleins sur la figure 1.

On fait passer l'éprouvette E à travers les fentes 41 tout en rapprochant les mors 3 et 4 jusqu'à les mettre face à face, à la même hauteur. Les coins 11 sont ensuite avancés de manière à recouvrir les fentes 41, empêchant de retirer l'éprouvette E, tout en coinçant cette dernière entre les surfaces horizontales 14 et 20. On règle ensuite les pions de centrage 26 de manière à réaliser le centrage longitudinal de l'éprouvette E. Enfin, on rapproche les mâchoires de pincement 36 et 37 pour saisir l'éprouvette suivant son épaisseur.

Il est donc possible de réaliser un réglage presque parfait de la position de l'éprouvette E dans la machine. Les coins 11 et les mâchoires de pincement 36 et 37 sont rapprochés avec précaution de manière à ne pas introduire d'efforts parasites dans les éprouvettes E. Aucun effort de serrage n'est nécessaire, et il suffit de maintenir en place.

L'essai en cisaillement se déroule par une introduction d'efforts sur l'embout 9 après avoir retiré les pions de centrage 26.

L'essai est statique avec une élévation graduelle de l'effort jusqu'à la rupture de l'éprouvette E si on le souhaite. Toutefois, des essais en cisaillement dynamique sont concevables.

La machine décrite est intéressante surtout pour les éprouvettes E très minces et qui sont donc sujettes au flambement. Les essais peuvent être menés sur tous les matériaux plausibles, notamment sur les matériaux composites et les céramiques.

## Revendications

1. Machine d'essais d'éprouvettes (E) en cisaillement comprenant deux mors (3, 4) reliés entre eux, dans lesquels les extrémités longitudinales (F) des éprouvettes (E) sont saisies et qui se déplacent mutuellement dans le sens de la largeur des éprouvettes, chacun des mors étant constitué de deux pièces mobiles (10, 11) mutuellement dans le sens de la largeur des éprouvettes et s'appuyant sur deux surfaces opposées des extrémités longitudinales (F) des éprouvettes (E) pour réaliser la saisie, caractérisée par une paire de mâchoires de pincement (36, 37) associée à chaque mors, les paires de mâchoires (36, 37) étant reliées au mors associé par un mécanisme de commande (32) permettant aux mâchoires de chaque paire d'être mobiles mutuellement dans le sens de l'épaisseur des éprouvettes (E) et de s'appuyer sur deux autres surfaces opposées des extrémités longitudinales des éprouvettes.

2. Machine d'essais d'éprouvettes selon la revendication 1, caractérisée en ce que les mécanismes de commande consistent en un arbre (32) tournant dans un des mors (3,4) correspondant et muni de parties filetées en sens opposés (33, 34) sur chacune desquelles une des mâchoires (36, 37) d'une paire respective est vissée.

3. Machine d'essais d'éprouvettes selon l'une quelconque des revendications 1 ou 2, caractérisée en ce qu'une des pièces des mors est un coin (11) et l'autre pièce des mors est à deux branches (12, 13) et en forme de fer à cheval (10), le coin étant déplacé par glissement sur la face interne (15) d'une des branches (12,13), dirigée vers la face interne (14) de l'autre branche, le coin ayant une face (20) dirigée vers cette autre branche (12) et parallèle à la face interne (14) de ladite autre branche.

4. Machine d'essais d'éprouvettes selon l'une quelconque des revendications 1 à 3, caractérisée en ce qu'elle comprend deux plaques (1, 2) sur chacune desquelles est situé un mors (3, 4), ainsi que deux colonnes (5, 6) s'étendant dans le sens de la largeur des éprouvettes, fixées à l'une des plaques (1) et dans lesquelles l'autre plaque coulisse (2), les mors (3,4) étant disposés entre les colonnes.

5. Machine d'essai s d'éprouvettes selon les revendications 3 et 4, caractérisée en ce que la branche (13) des pièces en fer à cheval (10) sur laquelle un coin glisse est fendue (41) dans le sens longitudinal des éprouvettes et en ce que l'autre branche (12) des pièces en fer à cheval est fixée à une des plaques (1, 2).

6. Machine d'essais d'éprouvettes selon l'une quelconque des revendications 1 à 5, caractérisée en ce qu'elle comprend une butée de positionnement longitufinale (26) des éprouvettes sur un des mors (3,4).

## Patentansprüche

1. Gerät zur Scherprüfung von Prüflingen (E) umfassend zwei untereinander verbundene Backen (3,4), in welchen die Prüflinge (E) mit den Enden der Längsseiten (F) erfaßt werden und welche gegeneinander in Richtung der Breite der Prüflinge verschiebbar sind, wobei die Backen aus zwei gegenseitig in Richtung der Breite der Prüflinge beweglichen Teilen (10,11) gebildet sind, die an zwei einander gegenüberliegenden Flächen der Längsenden (F) der Prüfling (E) zum Zwecke des Erfassens anliegen, **dadurch gekennzeichnet, daß** ein Paar Klemmbacken (36,37) jeder Backe zugeordnet sind, wobei die Klemmbackenpaare (36,37) mit den zugeordneten Backen mittels eines Stellmechanismus (32) verbunden sind, der eine gegenseitige Beweglichkeit der Klemmbacken jedes Paares in Richtung der Dicke der Prüflinge (E) und ein Abstützen auf zwei weiteren einander gegenüberliegenden Flächen der Längsenden der Prüflinge gewährleistet.

2. Gerät zur Prüfung von Prüflingen nach Anspruch 1, **da****durch gekennzeichnet, daß** die Stellmechanismen aus einer in einer der korrespondierenden Backen (3,4) drehbaren Spindel (32) gebildet sind, und die mit Gewindeabschnitten entgegengesetzten Sinnes (33,34) versehen ist, über die jede der Klemmbacken des betreffenden Paares verschraubbar ist.

3. Gerät zur Überprüfung von Prüflingen nach einem der Ansprüche 1 oder 2, **dadurch gekennzeichnet,** **daß** eines der Teile der Backen ein Keil (11) ist, und das andere Teil der Backen aus zwei Schenkeln (12,13) in Form eines Hufeisens (10) gebildet ist, wobei der Keil auf einer Innenfläche (15) eines der Schenkel (12,13) gleitverschieblich ist, die zur Innenfläche (14) des anderen Schenkels gerichtet ist, wobei der Keil eine Fläche (20) aufweist, die gegen den anderen Schenkel (12) und parallel zur Innenfläche (14) des anderen Schenkels gerichtet ist.

4. Gerät zur Prüfung von Prüflingen nach einem der Ansprüche 1 bis 3, **dadurch gekennzeichnet, daß** es zwei Platten (1,2) umfaßt, wobei auf jeder ein Backen (3,4) angeordnet ist, und daß zwei Säulen (5,6), die an einer der Platten (1) befestigt sind und in welchen die andere Platte (2) verschieblich ist, sich in Richtung der Breite der Prüflinge erstrecken, wobei die Backen (3,4) zwischen den Säulen angeordnet sind.

5. Gerät zur Prüfung von Prüflingen nach den Ansprüchen 3 und 4, **dadurch gekennzeichnet, daß** der Schenkel (13) des hufeisenförmigen Teils (10) auf dem ein Keil gleitet in Langsrichtung der Prüflinge geschlitzt (41) ist, und daß der andere Schenkel (12) des hufeisenförmigen Teils an einer der Platten (1,2) befestigt ist.

6. Gerät zur Prüfung von Prüflingen nach einem der Ansprüche 1 bis 5, **dadurch gekennzeichnet, daß** sie einen Anschlag zur Längspositionierung (26) der Prüflinge auf einem der Backen (3,4) umfaßt.

## Claims

1. Machine for the shear testing of testpieces (E) having two jaws (3, 4) interconnected so as to grasp longitudinal ends (F) of testpieces (E) and mutually move the same in the width direction of the testpieces, each of the jaws being constituted by two parts (10, 11) mutually mobile in the width direction of the testpieces so as to bear on two opposite surfaces of the longitudinal ends (F) of the testpieces for grasping purposes, characterized by a pair of gripping jaw members (36, 37) associated with each jaw, the pairs of jaw members (36, 37) being connected to the associated jaw by a control mechanism (32) enabling the jaw members of each pair to be mutually mobile in the thickness direction of the testpieces (E) and to bear on two other opposite surfaces of the longitudinal ends of the testpieces.

2. Testpiece testing machine according to claim 1, characterized in that the control mechanisms are constituted by a shaft (32) rotating in one of the corresponding jaws (3, 4) and provided with portions (33, 34) threaded in opposite directions and onto each of which is screwed one of the jaw members (36, 37) of a respective pair.

3. Testpiece testing machine according to either of the claims 1 and 2, characterized in that one of the parts of the jaws is a wedge (11) and the other part comprises two branches (12, 13) shaped like a horseshoe (10), the wedge being displaced by sliding on the inner face (15) of one of the branches (12, 13), directed towards the inner face (14) of the other branch, the wedge having a face (20) directed towards said other branch (12) and parallel to the inner face (14) of said other branch.

4. Testpiece testing machine according to any one of the claims 1 to 3, characterized in that it comprises two plates (1, 2), on each of which is fixed a jaw (3, 4), as well as two columns (5, 6) extending in the width direction of the testpieces, fixed to one of the plates (1) and in which the other plate (2) slides, the jaws (3, 4) being located between the columns.

5. Testpiece testing machine according to either of the claims 3 and 4, characterized in that the branch (13) of the horseshoe-shaped parts (10) on which slides a wedge is slotted (41) in the longitudinal direction of the testpieces and in that the other branch (12) of the horseshoe-shaped parts is fixed to one of the plates (1, 2).

6. Testpiece testing machine according to any one of the claims 1 to 5, characterized in that it comprises a longitudinal positioning abutment (26) for the testpieces on one of the jaws (3, 4).
